# EUROPEAN PATENT APPLICATION

(11) **EP 4 733 635 A1**
(43) Date of publication of application: **29.04.2026**
(21) Application number: 25208851.3
(22) Date of filing: 15.10.2025
(51) Int. Cl.: F16H 63/30, B60K 1/00

(54) **SELECTION AND ENGAGEMENT DEVICE FOR LAND VEHICLE TRANSMISSIONS AND AXLE DRIVE INCLUDING THE SELECTION AND ENGAGEMENT DEVICE**

(30) Priority: 24.10.2024 IT 202400023718
(71) Applicant: FPT Industrial S.p.A., 10156 Torino (IT)
(72) Inventor: ESPOSITO, Pietro, 10156 Torino (IT); PESOLA, Fabio, 10156 Torino (IT); TESSITORE, Marco, 10156 Torino (IT); COLACITO, Emanuele, 10156 Torino (IT); CANTONE, Francesco, 10156 Torino (IT); FEOLA, Domenico, 10156 Torino (IT)
(74) Representative: Fiume, Orazio

(57) **Abstract**

Selection device for land vehicle transmissions, comprising a cylindrical hub (MF), operatively connected to a traction element such as a shaft or a gear wheel (DR), axially fixed; a first sliding sleeve (SM1) fitted internally to the hub so that it slides axially relative to the hub and is fixed in rotation with the hub; a first control collar (C1) for the first sliding sleeve, fitted externally to the hub, in which the hub is equipped with through-slots (Y), and the sliding sleeve and its control collar are interconnected through said through-slots (Y).

## Description

### Field of the invention

The present invention relates to the field of transmissions for land vehicles and in particular for commercial and industrial vehicles.

### State of the art

It is well known that the automotive industry is moving toward electrification.

Commercial and industrial vehicles have different requirements than the passenger vehicle field.

These vehicles are generally referred to as LCVs (Light Commercial Vehicles), MCVs (Medium Commercial Vehicles), and HCVs (Heavy Commercial Vehicles), such as trucks and cars in general.

While passenger vehicles can adopt sophisticated and high-performance solutions, commercial and industrial vehicles must ensure robustness and durability.

Indeed, many electrification solutions include electric axles with one or at most two transmission ratios to increase the efficiency of the electric machine.

The axle itself includes one or more electric machines configured to exchange torque with the axle shafts and therefore with the wheels, to provide propulsion or generate energy depending on the vehicle operating conditions.

Examples of e-axles are illustrated in patent publications US2022/0250457 A1, US2020/0282827 A1, or US2022/0065334 A1. These solutions involve the use of electric machines in a so-called "on-axis" configuration, where the axis of the electric machine is coaxial with the axis of the axle shafts.

US2020/0282827 shows, for example, the implementation of a sliding sleeve capable of selectively engaging three gear ratios.

This solution, having a central and two end positions, is incompatible with the implementation of shaped or tapered teeth, or "back-taper" to prevent the sleeve from disengaging in the reached position.

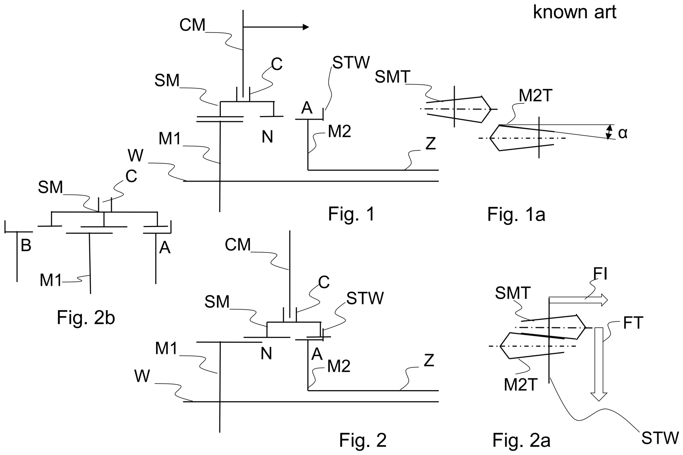

Figure 1 of the prior art shows a cylindrically symmetrical solution in which the axially sliding sleeve SM is equipped with a pair of internal radial teeth, of which a first tooth engages with the hub M1 integral with the driving shaft W. The second internal toothing of the sleeve SM, in figure 1, does not mesh simultaneously with the hub M2, integral with the shaft Z, guided, coaxial with the shaft W. This configuration represents a neutral condition for the clutch system.

Figure 1a shows a pair of teeth SMT and M2T from the second set of teeth on the sleeve SM and the hub M2, respectively. These teeth have a trapezoidal shape opposite to their mutual facing direction. Therefore, a taper angle α is identified for each of the working faces of the teeth.

Figure 2 shows a condition in which the control CM, acting on the collar C, causes the sleeve SM to engage with the hub M2, causing the operational connection between the shafts W and Z.

The sleeve SM and its collar are integral with each other.

Figure 2a shows the effect of the trapezoidal shape of the teeth. The tooth SMT exerts a drag force FT against the tooth M2T. Since the contact faces are not perpendicular to the direction of the drag force, an additional engagement force FI is generated, from left to right of the sheet, with a magnitude directly proportional to the force FT and the magnitude of the angle alpha. This effectively prevents the sleeve from disengaging from the hub, for example, under the effect of vibrations or lateral accelerations from the vehicle.

A mechanical lock (not shown) prevents the sleeve or control from moving the sleeve further to the right of the sheet, maintaining the faces of the teeth SMT and M2T in mutual contact. The presence of this lock ensures that this axial engagement maintenance force is discharged directly onto the engaged wheel, preferably avoiding transfer to the external control system that moves the sleeve and therefore upstream of the engagement system consisting of the torque distribution hub, the torque transfer sleeve, and the torque input hub called the crown, rotatably connected to the wheel to be driven.

The external control system can consist of manually operated levers or any type of actuator suitable for moving the sleeve along the axis of the wheels with defined strokes and positions.

This solution is very useful as it prevents the selected gear from being disengaged during torque exchange between the elements.

It is clear that this solution can be adopted for no more than two gears, as the sliding sleeve can be equipped with a first set of teeth on the right with tapered teeth and a second set of teeth on the left with tapered teeth opposite to the first set of teeth, and a central set of teeth with symmetrical teeth, which receives the motion from the hub M1, allowing the sleeve to slide to the right or left, selectively engaging A and B. An example of such a sleeve is shown in figure 2b.

If an additional gear is placed next to A (or B), externally, it would not be possible to provide mechanical stops to lock the respective left (or right) teeth in A (or B). This is because the mechanical stop prevents the teeth of the sliding sleeve from completely passing through A (or B) to engage the additional gear.

The problem is that when engaging three or more gears, it is not possible to use stub and tapered teeth as shown in Figures 1a and 2, which would guarantee the function of maintaining the engaged gear in combination with the presence of mechanical blocking walls.

Unless specifically excluded in the detailed description that follows, the descriptions in this chapter are to be considered an integral part of the detailed description.

### Summary of the invention

The purpose of this invention is to propose a solution that allows for the implementation of more than two gears even when stub and tapered teeth are used on the sleeve and the respective hubs.

The basic idea of this invention is to introduce a fixed cylindrical hub with a drive wheel equipped with slots that connect a control collar, fitted externally to the hub, to a first corresponding sliding sleeve, fitted internally to the hub, using connecting screws.

The connecting screws themselves provide the first anti-rotation means that prevent mutual rotation between the hub and the first sliding sleeve. The slotted openings in the hub allow the sleeve to move along the rotation axis of the system.

Preferably, the sliding sleeve is connected to the hub by a splined coupling with reduced clearance compared to the clearance between the connecting means and the slots, so as to relieve the connecting screws between the sliding sleeve and the respective collar of any shear stress due to the transmission of torque.

Advantageously, according to the present invention, the hub can support a second sliding sleeve by means of an axially sliding coupling, equipped with second anti-rotation means that may be similar to the connecting screws described above and/or by means of a splined coupling, in which the second sliding sleeve is connected next to the first sleeve along the axial direction.

Preferably, both the first sleeve and the second sliding sleeve are connected to the hub by means of a splined coupling.

Preferably, the control collar of the first and/or second sliding sleeve is also fitted externally to the hub by means of a splined coupling.

According to a further preferred variant of the invention, the second sliding sleeve, similar to the first sliding sleeve, is fitted internally to the hub and connected to the respective collar by connecting screws that pass through the hub at the same or additional slotted openings. In this case, in combination with the first internal sleeve, the torque can be distributed to three or four positions equipped with mechanical locks and their functions for maintaining the engaged gear in combination with the tapered teeth as described in the previous chapter.

The dependent claims describe preferred variants of the invention and form an integral part of this specification.

### Brief description of the figures

Further purposes and advantages of the present invention will become clear from the following detailed description of an embodiment thereof (and variations thereof) and the accompanying drawings, provided purely for explanatory and non-limiting purposes, in which:
Figs. 1, 1a, 2, and 2a show prior art radial tooth clutch solutions;
Fig. 3 shows a first preferred variant of the present invention;
Fig. 4 shows a second preferred variant of the present invention;
Fig. 5 shows a possible application of the present invention in a rear axle drive of a land vehicle;

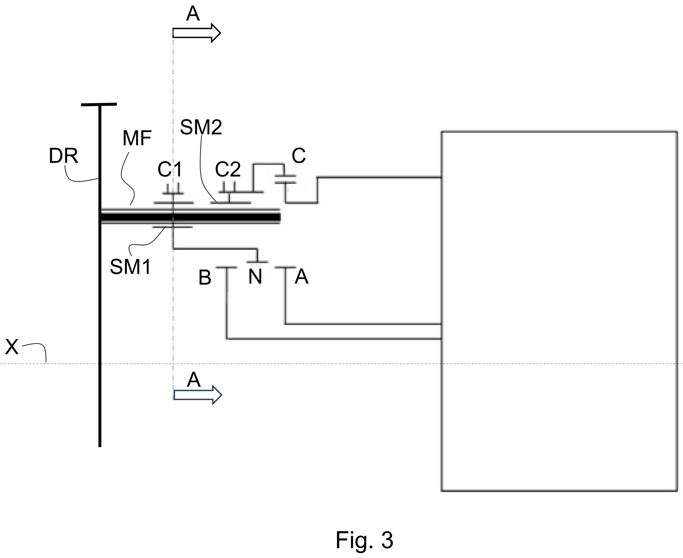

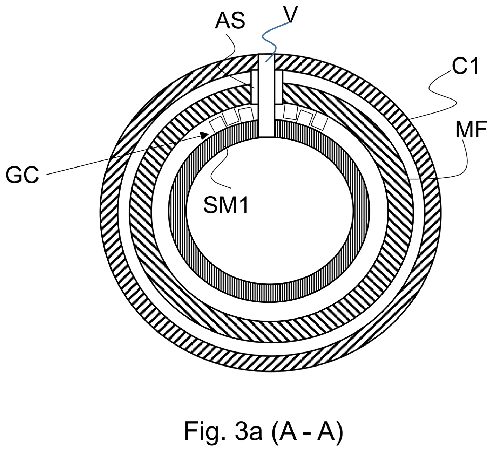

Fig. 3a shows a cross-section of the side view of Fig. 3.

The same reference numbers and letters in the figures identify the same elements or components or functions. It should also be noted that the terms "first," "second," "third," "upper," "lower," and the like may be used here to distinguish various elements. These terms do not imply a spatial, sequential, or hierarchical order for the modified elements unless specifically indicated or inferred from the text. The elements and features illustrated in the various preferred embodiments, including the drawings, may be combined with each other without departing from the scope of protection of this application as described below.

### Detailed description of preferred embodiments

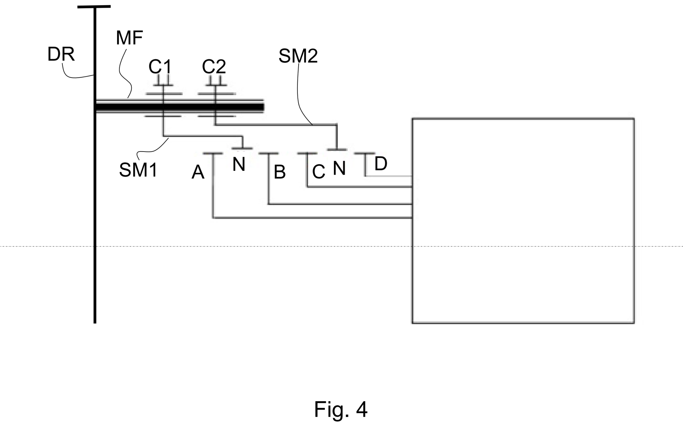

With reference to Figs. 3 and 4, in a transmission that defines a development axis X, a cylindrical hub MF coaxial with the X axis is associated with a drive wheel DR or a drive shaft.

The purpose of the hub is to support two or more sliding sleeves SM1, SM2.

According to Fig. 3, the hub MF includes at least one slotted opening AS through which it is possible to connect a sliding sleeve SM1 with its control collar C1, so that the sliding sleeve is fitted internally to the hub, while the collar C1 is fitted externally to the hub.

Screws, driven pins, and in general any other connecting means V can be used to interconnect the sliding sleeve with its control collar.

Advantageously, the control is mounted externally to the hub, while the teeth of the sliding sleeve are internal and arranged to selectively engage the first driven wheel A and the second driven wheel B, or to not engage either of the driven wheels A and B and assume a neutral condition. According to the variant shown in Figure 3, a second sliding sleeve is fitted externally to the hub, to selectively engage a corresponding set of teeth on a further driven wheel C.

The teeth of the second sliding sleeve SM2 are shown as internal teeth, but they can also be external, depending on how the driven wheel C is constructed.

It is worth noting that the second sliding sleeve, depending on its configuration, can selectively engage two driven wheels. Therefore, there is no restriction in this regard.

The purpose of Fig. 3 is to demonstrate the possibility of using trapezoidal teeth equipped with mechanical locking limit walls STW, implementing a three-speed solution.

It is also clear that the sliding sleeve can be fitted externally to the hub, while the corresponding control collar is fitted internally to the hub.

In the solution shown in Fig. 4, the second sliding sleeve is configured identically to the first sliding sleeve.

Therefore, the second sliding sleeve can selectively engage the third driven wheel C and the fourth driven wheel D starting from a non-engaged or neutral position called neutral N.

Evidently, the second sliding sleeve can also assume the neutral position, not engaging any driven wheel.

It is worth noting that it is important to coordinate the actuation of the controls of the first and second sliding sleeves so that only one sliding sleeve at a time can engage a corresponding driven wheel, avoiding transmission failure if the transmission does not provide for simultaneous engagement or if there are additional disconnection systems, such as clutches, within it.

It is clear that the sliding sleeves SM1 and SM2 slide axially, i.e., along the X-axis, so as to engage or disengage from the respective driven gears of the transmission.

The hub and the sliding sleeves are integral with each other and rotate around the X-axis.

As described above, the presence of the screws passing through the hub itself provides an anti-rotation mechanism between the respective sliding sleeve and the hub. However, it is preferable for the sliding sleeve to be coupled to the hub using a GC splined coupling, so as to transmit torque only through the splined coupling via the appropriate configuration of the circumferential clearances between the components. In particular, the slots are sized so as not to allow torque transfer through the V-screws. Preferably, the collar of the first sliding sleeve is also coupled to the hub via a splined coupling.

Preferably, therefore, the hub has an internal and an external groove to support at least one collar and, if necessary, to support a sliding sleeve fitted internally to the hub.

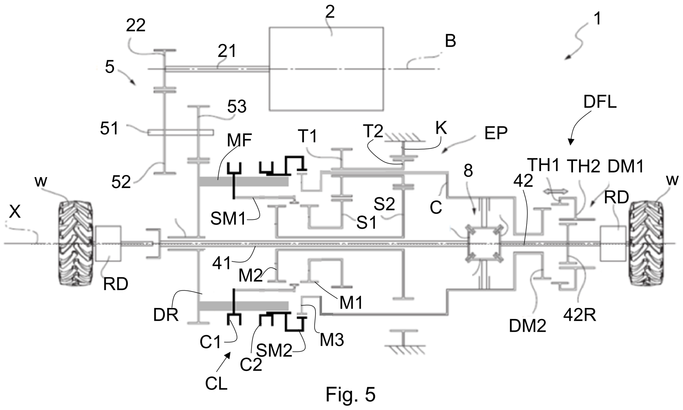

A possible application of the present invention is shown in Figure 5, relating to an electric axle comprising a transmission that operatively connects an electric machine 2 and a pair of wheels W connected by half-shafts 41, 42 of the electric axle 1. The electric machine 2, as is known, is electrically connected to an energy source, such as a battery pack (not shown) of the vehicle and is configured to exchange energy with it, in particular receiving it to generate torque towards the wheels W or to input it into the same, receiving torque from the wheels W. As schematically shown, the transmission of the electric axle 1 comprises an intermediate transfer device 5, a gear selection device CL, an epicyclic gear train EP, and a differential unit 8.

The gear selection device CL is in accordance with the present invention.

In the example, the electric machine is not coaxial with the wheels W and the architecture of the axle drive is therefore said to be of the off-axle type.

Specifically, the hub MF is integral with or connected to the rotation of a drive wheel DR, arranged to receive the rotational motion from the electric machine 2, via the intermediate transfer device 5.

The epicyclic gearset EP is of the so-called "planetary stepped gearset" type with two sun gears, at least three sets of "stepped" planetary gears, i.e., equipped with two distinct teeth, integral in rotation with each other, and an internally toothed ring gear fixed to an axle casing (not shown), configured to achieve three different reduction ratios and including an output port coinciding with the input port of the differential unit 8.

The epicyclic gearset comprises:
- a first input port coinciding with a first sun gear S1,
- a second input port coinciding with a second sun gear S2,
- a third input port coinciding with the planetary carrier or gear carrier C.

According to the variant shown in Figure 5, the planetary carrier C rotatably supports a A plurality of step-type planetary gears coupled in pairs, generally referred to as stepped, as each planetary gear has two teeth, T1 and T2, of different diameters.

There are therefore two sun gears, S1 and S2, which mesh with teeth T1 and T2, respectively.

The sun gears are supported by respective hollow shafts, mutually coaxial and coaxial with one of the half-shafts 41, 42.

The first sun gear, S1, is integral with the respective hollow shaft of the hub M1.

The second sun gear, C2, is integral with the respective hollow shaft of the hub M2.

The two hubs are configured so that they can be selectively engaged by the selection device CL, which comprises a first sliding sleeve, SM1, axially keyed internally to the hub MF, fixed to the drive wheel DR.

As previously described, the first sleeve SM1 is operationally connected to the control collar C1 by screws passing through special slots machined into the hub MF. These slots are axial so as to allow the first collar SM1 and the corresponding first collar C1 to translate axially in connection with each other, so that the first sliding sleeve can selectively engage one of the two hubs M1 and M2.

The hubs M1 and M2 comprise radial teeth with stub and tapered teeth as described in the prior art.

The first sliding sleeve SM1 comprises complementary teeth to engage the teeth of the hubs M1 and M2, respectively.

The first sliding sleeve can assume the neutral or idle condition, not engaging either of the hubs M1 and M2.

The CL selection device includes a second sliding sleeve SM2 configured to engage a third hub M3 integral with the planetary carrier C or to define a neutral condition. Obviously, while the second sliding sleeve is in neutral, the first sliding sleeve can be in neutral or engage one of the two hubs M1 or M2. While when the first sleeve is in neutral, the second sliding sleeve can be in neutral or engage the third hub M3.

Thanks to this solution, clutches with stub and tapered teeth can be used to achieve an anti-disengagement function in the presence of multiple coaxial gear ratios and central neutral positions to be crossed during gear changes.

The intermediate transfer device 5 comprises a shaft 51 to which a first wheel 52 and a second wheel 53 are fixed. The first wheel 52 is arranged to engage a pinion 22 keyed to a drive shaft 21 of the electric machine 2. The second wheel 53 is arranged to engage the drive wheel DR to which the hub MF of the selection device CL of the present invention is fixed.

Preferably, the drive axle/bridge is equipped with additional reduction gears RD.

Furthermore, the differential 8 is preferably equipped with a locking device DFL capable of locking the differential housing from rotation with a drive shaft.

Specifically, the sliding sleeve DM1 is designed to rotate the differential case and a driveshaft 42, simultaneously engaging a first gear 42R integral with the driveshaft 42 and a second gear DM2 integral with the differential case, via respective internal teeth TH1 and TH2 of the sliding sleeve DM1.

Variants to the non-limiting example described are possible, without departing from the scope of protection of the present invention, including all embodiments equivalent to the claims for a person skilled in the art. From the above description, a person skilled in the art is able to implement the invention without introducing further construction details.

## Claims

1. Shift device for transmissions of land vehicles, comprising
- a hub (MF), of cylindrical shape, operatively connected to a driving member such as a shaft or a toothed wheel (DR), axially fixed,
- a first sliding sleeve (SM1) fitted internally or externally to the hub (MF) so as to slide axially with respect to the hub and fixed in rotation with the hub,
- a first control collar (C1) of the first sliding sleeve, fitted on the hub externally or, respectively, internally, wherein the hub is equipped with at least one through slot (AS) and the sliding sleeve and the corresponding control collar are interconnected through said at least one through slot (AS).

2. Device according to claim 1, further comprising
- a second sliding sleeve (SM2) fitted externally to the hub sliding axially with respect to the hub and fixed in rotation with the hub, and
- a second control collar (C2) of the second sliding sleeve (SM2), associated with the second sleeve externally to the hub.

3. Device according to claim 1, further comprising
- a second sliding sleeve (SM2), fitted internally to the hub so as to slide axially with respect to the hub and fixed in rotation with the hub,
- a second control collar (C2) of the first sliding sleeve, fitted externally to the hub,
wherein the sliding sleeve and the corresponding control collar are interconnected through said through slots (Y).

4. Device according to any one of the preceding claims, wherein said first sliding sleeve is associated with the hub by means of a splined coupling.

5. Device according to any of claims 2 - 4, wherein said second sliding sleeve is associated with the hub by means of a splined coupling.

6. Device according to any of claims 1 - 5, wherein said first control collar (C1) is associated with the hub by means of a splined coupling.

7. Device according to any of claims 2 - 6, wherein said second control collar (C2) is associated with the hub by means of a splined coupling.

8. Device according to any of claims 4 - 7, wherein said first sliding sleeve and said first collar are interconnected by means of connecting means (V) such as screws or press fit pins or any type of means suitable for establishing a stable connection, so that said connecting means are arranged such that to do not support a torque transfer between the hub and the first sliding sleeve under operating conditions.

9. Device according to any one of the preceding claims, wherein said first sliding sleeve comprises two toothings with trapezoidal teeth complementary to the toothings of the same number of gear wheels (M1, M2), so as to define an anti-disengagement system in combination with axial mechanical blocks (STW) defining end runs.

10. Device according to claim 9, wherein said axial mechanical blocks are made of one piece with the trapezoidal toothings or of one piece with an external component, intended to be integral in rotation with the sliding sleeve, in engaged conditions.

11. Device according to any of claims 2 - 10, wherein both said first and second sliding sleeves are able to assume a neutral condition and wherein at least one of said first and second sliding sleeves is able to perform two selective engagements.

12. Electric traction axle/bridge, (1) for a land vehicle, comprising at least one electric machine (2), a pair of half-shafts (41, 42) arranged to support in rotation a respective wheel (W) and a transmission operatively connecting said at least one electric machine (2) to said pair of half-shafts (41, 42), wherein the transmission is configured to achieve three or more transmission ratios, comprising a shift device (CL) to engage a respective hub (M1, M2, M3), wherein the shift device complies with any one of claims 1 - 11.

13. Axle/bridge according to claim 12, wherein said transmission comprises an epicyclic gear train (EP) comprising a satellite carrier (C) rotatably supporting a plurality of step-type satellites, wherein each satellite has two sets of teeth (T1, T2), having different diameters, integral in rotation with each other, wherein a first set of teeth is arranged to mesh externally with a fixed crown (K), and wherein each of said two sets of teeth is arranged to mesh internally with a respective sun gear (S1, S2), and wherein each sun gear is operatively connected respectively with a first and a second hub (M1, M2) to define the same number of gears and wherein said satellite carrier is operatively connected to a third hub (M3) to define a further gear and wherein said shift device comprises
- a first sliding sleeve (SM1) axially arranged to mesh selectively with said first and second hub and
- a second sliding sleeve (SM2) axially arranged to mesh with said third hub,
and wherein both said first and second sliding sleeves are also adapted to provide a neutral condition.

14. Axle/bridge according to claim 12 or 13, wherein said epicyclic gear train is coaxial with one of the half-axles (V1, V2).

15. Axle/bridge according to any of claims 12 - 14, further comprising a transfer device (5) for operatively interconnecting said electric machine (2) with said hub (MF), wherein said transfer device (5) comprises a shaft (51) on which a first wheel (52) and a second wheel (53) are fixed, wherein the first wheel is arranged to engage a pinion (22) keyed to a drive shaft (21) of the electric machine (2) and the second wheel (53) is arranged to engage the drive wheel (DR) on which the hub (MF) of the shift device (CL) is fixed.

16. Axle/bridge according to any of claims 12 - 15, wherein said drive wheel (DR) is coaxial with said half-shaft (41, 42).

17. Axle/bridge according to any of claims 12 - 16, wherein each half-shaft is connected to a respective wheel (W) by means of a reduction device (RD).

18. Axle/bridge according to any of claims 12 - 17, further comprising a differential device (8) arranged to drive said pair of half-shafts (41, 42) in rotation, and wherein the axle/bridge further comprises a differential lock device (DFL).
